(19) Europäisches Patentamt
European Patent Office
Office européen des brevets

(11) Veröffentlichungsnummer : **0 127 809**
**B1**

(12) # EUROPÄISCHE PATENTSCHRIFT

(45) Veröffentlichungstag der Patentschrift : **17.08.88**

(51) Int. Cl.⁴ : **G 06 F 13/00**, G 07 F 7/10

(21) Anmeldenummer : **84105460.4**

(22) Anmeldetag : **14.05.84**

(54) **Schaltungsanordnung mit einem Speicher und einer Zugriffskontrolleinheit.**

(30) Priorität : **18.05.83 DE 3318083**

(43) Veröffentlichungstag der Anmeldung : **12.12.84 Patentblatt 84/50**

(45) Bekanntmachung des Hinweises auf die Patenterteilung : **17.08.88 Patentblatt 88/33**

(84) Benannte Vertragsstaaten : **AT DE FR GB IT SE**

(56) Entgegenhaltungen :
**EP-A- 0 044 039**
**WO-A-81 /024 80**
**FR-A- 2 311 360**
**FR-A- 2 401 459**
**FR-A- 2 471 004**
**FR-A- 2 503 424**
**US-A- 4 105 156**

(73) Patentinhaber : **Siemens Aktiengesellschaft Berlin und München**
**Wittelsbacherplatz 2**
**D-8000 München 2 (DE)**

(72) Erfinder : **Schrenk, Hartmut, Dr.**
**Fasanenweg 22**
**D-8013 Haar (DE)**

**EP 0 127 809 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft eine monolithisch integrierbare Schaltungsanordnung nach dem Oberbegriff des Patentanspruchs 1.

Zum bargeldlosen Bezahlen von Waren oder zum Abrechnen von Dienstleistungen und ähnlichem sind datengesteuerte Zahlungssysteme bekannt, die beispielsweise in der Zeitschrift « Betriebspraxis », B.BL.2/1982, Seite 48, von Dr. R. Nowak und W. Röder unter dem Titel « Die Chip-Karte - nächste Generation der Automatenkarte » beschrieben sind. Die dabei verwendeten Karten tragen als ein wesentliches Element einen nichtflüchtigen elektrischen Datenspeicher, auf den über elektrische Kontakte an der Kartenoberfläche zugegriffen werden kann. Über ein Kartenlesegerät wird von einer Recheneinheit bei jedem Gebrauch auf den Speichereinhalt zugegriffen, der dabei gegebenenfalls geändert wird.

Zur Anwendung kommen derartige Karten in Sicherheits- und Zugriffssystemen, in Abrechnungs- oder Registriersystemen und in Debit- oder Kreditsystemen. Um eine weite Verbreitung und häufigen Gebrauch der Karten zu gewährleisten, gibt es Betreiber solcher Systeme, die eine Vielzahl von Karten ausgeben, und die ein weitverzweigtes Netz von Lesegeräten und Rechenanlagen anbieten. Um Mißbräuche der Daten auszuschließen, müssen dabei jedoch hohe Sicherheitsanforderungen an die Kartensysteme gestellt werden. Besonders die Trägerkarten, deren Verbreitung nicht immer kontrollierbar ist, müssen vor einer Benutzung durch Unberechtigte geschützt werden.

Dies kann durch eine Freigabeoperation erreicht werden, bei welcher ein Datenvergleich zwischen einem von einer Bedienperson ein gegebenen oder von einer Rechenanlage verschlüsselten Code-Wort mit einem abgespeicherten Referenzwort durchgeführt wird, und abhängig vom Vergleichsergebnis der Zugriff freigegeben bzw. unterbunden wird.

Dabei besteht jedoch die Gefahr, daß ein Unberechtigter sich die zur Freigabe erforderlichen geheimen Informationen durch systematisches Probieren oder durch Abhören des Datenverkehrs während einer Freigabeoperation verschaffen kann.

In der Durchführung der Freigabeoperation und in der Verschaltung der dazu erforderlichen Mittel liegen die hauptsächlichsten Unterschiede der bekannten Kontrollvorkehrungen.

Aus der FR-PS 23 11 360 ist zur Ermittlung einer Zugriffsberechtigung bekannt, eine bestimmte Anzahl von Codeeingaben durch die Bedienperson vorzusehen, und alle unzulässigen Versuche in einem dafür bereitgestellten Speicher so oft abzuspeichern, bis der gesamte Speicherraum belegt ist. Daraufhin wird die zu schützende Einheit außer Betrieb gesetzt.

Ferner ist in der FR-PS 24 01 459 in dem oben beschriebenen Zusammenhang ein Datenspeicher beschrieben, der durch unterschiedliche Zugriffsbedingungen in einen geheimen, nicht extern zugänglichen Speicherbereich und in zwei weitere Speicherbereiche unterteilt ist, die extern nur beschreibbar bzw. lesbar sind.

Eine weitere Kontrolleinheit wird in der WO-OS 81/02 480 offenbart. Sie wirkt in der Weise, daß die tatsächliche Adresse des zu schützenden Speichers aus einer Verknüpfung der extern einzugebenden Speicheradresse mit Datenwörtern aus einem internen Hilfsspeicher in einer Rückkopplung gebildet wird.

Schließlich ist aus der FR-PS 24 71 004 eine Schaltungsanordnung mit einem Speicher und einer Kontrolleinheit bekannt, bei welcher bei einem unzulässigen Zugriff die Verbindung zwischen der Adressierungseinheit und dem Adressierdekoder des Speichers unterbrochen wird.

Der Erfindung lag daher die Aufgabe zugrunde, eine Schaltungsanordnung der o. g. Art anzugeben, mit welcher eine Freigabeoperation durchführbar ist, die das unberechtigte Entschlüsseln der dazu erforderlichen geheimen Daten erschwert.

Diese Aufgabe wird bei einer Schaltungsanordnung der eingangs genannten Art erfindungsgemäß durch die Merkmale des kennzeichnenden Teils des Patentanspruchs 1 gelöst.

Da der im Speicher niedergelegte Vorrat an Referenzdaten größer ist als die Anzahl der während einer Operation benötigten Referenzdaten, kann diese zusätzlich gespeicherte Information dazu dienen, den Datentransfer von der Recheneinheit zu der Schaltungsanordnung während der Freigabeoperation zu variieren und umzuschlüsseln. Der Datenverkehr ist dadurch für einen unberechtigten Lauscher schwer entschlüsselbar.

Die zufällige oder unerlaubte Kenntnis eines Satzes von Code-Daten, die für eine Freigabeoperation erforderlich sind, gibt einem Betrüger noch nicht die Möglichkeit, die entsprechenden Referenzdaten im Speicher so zu verändern, daß der unerlaubte Zugriff wiederholbar ist. Ebensowenig besteht die Möglichkeit, betrügerisch selbst hergestellte Schaltungen bzw. Speicher zu verwenden.

Weiterbildungen der Erfindung ergeben sich aus den Unteransprüchen.

Im folgenden wird die Erfindung anhand eines Ausführungsbeispiels weiter beschrieben.

Fig. 1 zeigt schematisch eine Anlage zum Datenaustausch zwischen einer Trägerkarte und einer Rechenanlage.

Fig. 2 zeigt ein Blockschaltbild einer Schaltungsanordnung mit Speicher und Zugriffskontrolleinheit.

Fig. 3 und 4 zeigen Einzelheiten der Schaltungsanordnung nach Fig. 2.

Figuren 5 und 6a, b, c, d zeigen ein Anwendungsbeispiel der Schaltungsanordnung nach Fig. 2 bzw. Fig. 3

Die Fig. 1 zeigt die in den Figuren 2, 3 im

einzelnen beschriebene Schaltungsanordnung II im Wirkungszusammenhang mit anderen Funktionseinheiten. Die Schaltung II ist in eine Trägerkarte 3 eingebettet. Durch Einstecken in eine Kartenaufnahme eines Kartenlesegerätes 2 kann über eine Kontaktierungsvorrichtung 21 ein Datenaustausch auf Dateneingabe/bzw. Datenausgabeleitungen DE DA mit einer Rechenanlage 20 erfolgen. Derartige Trägerkarten 3 sind beispielsweise als Kredit- oder Debitkarten einsetzbar. Kartenlesegeräte 2 kommen beispielsweise als Geldausgabeautomaten zur Anwendung. Daneben sind derartige Schaltungen II auch ohne ein kartenfömiges Trägermedium zum Einsatz in zugriffsgesicherten Anlagen geeignet.

Ein uneingeschränkter Datenaustausch, beispielsweise um eine Geldausgabe zu bewirken, erfolgt nur dann, wenn von der Schaltungsanordnung II ein Freigabesignal erzeugt worden ist. Diese Voraussetzung ist nach einer erfolgreichen Freigabeoperation gegeben. Sofern es für die Kartenbenutzung erforderlich ist, gibt dabei der Benutzer ein oder mehrere individuelle Code-Wörter über eine Dateneingabe einheit 22 an die Rechenanlage 20 zur Weitergabe an die Schaltung II ein. Während der Freigabeoperation ist der Datenaustausch soweit beschränkt, daß ausschließlich nur die zur Prüfung erforderlichen Operationen durchführbar sind. Dazu gehört die Abgabe von Steuer- und Adreßsignalen über die Leitungen ST, A an die Schaltungsanordnung 2.

Fig. 2 zeigt ein Blockschaltbild für eine Schaltungsanordnung II zum Erzeugen des Freigabesignals FREI. Die Schaltung weist ein Register 1 mit Adreßregister 1′ und Datenregister 1″ auf. Das Datenregister 1″ dient zur Aufnahme von Code-Daten, wobei die Bit-Folge im Adreßregister 1′ über den Adreßdekoder 6 den Speicherplatz von Referenzdaten im Speicher 7 ansteuert.

Zwischen dem Speicher 7 und dem Datenregister 1″ liegt ein Komparator 5 zur Durchführung von Vergleichsoperationen zwischen mehreren Code-Daten und Referenzdaten. Die Vergleichsoperationen können dabei nacheinander oder gleichzeitig durchgeführt werden. Wird in einer Vergleichsoperation eine Übereinstimmung zwischen Code-Daten und Referenzdaten festgestellt, so gibt die Vergleichseinheit 5 jeweils ein Vergleichssignal DOK an eine Adreßkontrolleinheit 4 ab. Bei Ungleichheit wird ein Fehlerregister 8 mit dem negierten Vergleichssignal DOK beaufschlagt.

Der Speicher 7 weist zeilen- und spaltenweise adressierbare, nicht flüchtige, elektrisch schreib- und löschbar Speicherzellen auf. Dabei sind jeweils mehrere Speicherzellen-abhängig von der Länge der Code- und Referenzdaten — unter einer Adresse anwählbar.

Der Speicherraum des Speichers 7 ist über einen Zeilendekoder 61 und einen Blockdekoder 62 ansteuerbar. Der Blockdekoder 62 legt dabei eine erste Teilmenge von Adressen innerhalb des Adreßraumes fest. Die diesen ersten Teilmengen entsprechenden Adreßleitungen A sind über eine erste Auswahllogik 10 an die Adreßkontrolleinheit 4 geführt. Die Funktion der Auswahllogik 10 kann auch vom Blockdekoder mit übernommen werden.

Die vom Zeilendekoder 61 zum Speicher 7 führenden Adreßleitungen sind über eine weitere Auswahllogik 13 ebenfalls mit der Adreß-Kontolleinheit 4 verbunden. Über diese zweite Teilmenge der Adreßleitungen ist der Adreßraum des Speichers 7 in zweite Teilbereiche, welche die Blockunterteilung überschneiden, unterteilbar. Beispielsweise ist auf diese Weise der Speicherbetrieb in einen Anwender-Datenspeicher und einen Code-Datenspeicher unterteilbar, die wiederum in Blöcke unterteilt sind.

Der Codedatenbereich kann dabei zur Aufnahme der Referenzdaten dienen. Sein Speicherinhalt ist deshalb über das Register 1 nicht auslesbar. Je nach Anwendungsfall ist ein Zugriff auf den Anwenderdatenspeicher, beispielsweise um ihn zu beschreiben oder zu löschen, nur nach einer erfolgreichen Vergleichsoperation durchführbar, an deren Ende das zweite Freigabesignal FREI erzeugt sein muß.

Über die Adreßkontrolleinheit 4 und die Auswahllogik 13 ist der Schaltung II eingeprägt, welche ersten und zweiten Teilmengen der Adreßleitungen während einer Freigabeoperation angewählt werden müssen. Ist in jeder der ersten Teilmengen von Adreßleitungen im Verlauf einer Freigabeoperation wenigstens eine Adresse für einen Datenvergleich angewählt worden, und/oder erfolgt die Adressierung zusätzlich in einer vorgegebenen Reihenfolge, so ist an der Adressier-Kontrolleinheit 4 ein erstes Freigabesignal F abgreifbar, welches zusammen mit dem Ausgangssignal des Fehlerregister 8 einer Verknüpfungseinheit 9 zugeführt ist.

Unabhängig davon wird bei jedem Vergleich, der eine Abweichung zwischen dem Referenzdatenwort und dem Codewort ergibt, ein Fehlerregister 8 gesetzt.

Sind die Zugriffsbedingungen auf den Adreßraum des Speichers 7 eingehalten und wurde durch die Vergleichseinheit 5 Übereinstimmung zwischen allen Codedaten und Referenzdaten festgestellt, so erzeugt die Verknüpfungseinheit 9 das Freigabesignal FREI.

Dieses kann mit Steuersignalen, die ein Lesen, Schreiben oder Löschen des Anwenderdatenbereiches bewirken, in einer Zugriffssicherung verknüpft werden (nicht dargestellt).

Bezüglich der folgenden Figuren ist die erste Teilmenge der Adreßleitungen durch acht Blöcke mit jeweils einer Vielzahl von acht Bit langen Speicherplätzen festgelegt. Die Ansteuerung erfolgt dabei durch die drei niederwertigsten Bits des Adreßwortes, die auf den Adreßleitungen A0, A1, A2 abgreifbar sind.

Zu den zweiten Teilmengen der Adreßleitungen gehören einerseits die Adreßleitungen für die ersten vier Zeilen und andererseits die Adreßleitungen für die übrigen Zeilen des Speichers 7. Dabei gehören die vier ersten Zeilen zum Codedatenbereich, und die übrigen Zeilen zum Anwenderdatenbereich. Falls eine der Adreßleitungen des Codedatenbereichs aktiviert ist, so wird dieser Zustand von der zweiten Auswahllogik 13 auf der Leitung Z angezeigt.

Die Adressierlogik 4 ist zusammen mit der ersten Auswahlogik 10 beispielhaft so aufgebaut, daß eine zeitliche Reihenfolge der Blockadressierung festgelegt ist. Diese besteht darin, daß die acht Blöcke nacheinander in aufsteigender Reihenfolge anzuwählen sind. Weiter wird beispielhaft festgelegt, daß nur jeweils der erste Zugriff auf einen Block zählwirksam ist. Außerdem sollen Referenzdaten, die im Anwenderdatenbereich abgespeichert sind, in den Datenvergleich gegebenenfalls einbezogen werden ; der Zugriff auf den Anwenderdatenbereich soll jedoch die Adreßkontrolleinheit 4 nicht beeinflussen.

Die Adreßkontrolleinheit 4 in Fig. 3 besteht den acht Blöcken entsprechend aus einer Zählkette von acht bistabilen Kippstufen 40, deren Setzeingänge jeweils über eine zweite Verknüpfungslogik, bestehend aus UND-Gliedern 11, eingangsseitig mit den Ausgängen der ersten und zweiten Auswahllogik 10, 13 verbunden sind. Die Setzeingänge der Kippstufen 40 sind jeweils über dem Ausgang eines zugeordneten NOR-Gliedes 12, mit einem Taktsignal und über ein UND-Glied 15 mit dem Ausgang der zweiten Auswahllogik 13 und dem Vergleichssignal DOK verbunden.

In der Adressierlogik 4' in Fig. 4 sind die Ausgänge Q aller Kippstufen 40 auf ein UND-Glied 16 geführt, an dessen Ausgang das erste Freigabesignal F abgreifbar ist. Dem Aufbau dieses Ausführungsbeispiels der Adressierlogik 4' liegt die Zugriffsbedingung zugrunde, daß im Verlauf der Vergleichsoperation ein jeder der durch die Adreßleitungen A0, A1, A2 festgelegten Blöcke mindestens einmal adressiert wird, um das erste Freigabesignal F zu erzeugen. Die Reihenfolge der Blockadressierungen hat in diesem Beispiel keinen Einfluß auf die Erzeugung des zweiten Freigabesignals FREI.

Das Fehlerregister 8 besteht aus zwei hintereinander geschalteten bistabilen Kippstufen 80, 81. Dabei ist der Setzeingang der ersten Kippstufe über ein UND-Glied 82 mit dem Ausgang $\overline{Q}$ der zweiten bistabilen Kippstufe 81 und mit dem Ausgang der Vergleichereinheit 5 über einen Negator 85 verbunden. Alle bistabilen Kippstufen der Adreß-Kontrolleinheit 4 und des Fehlerregisters 8 werden bei Auftreten eines Setztaktes Ø gesetzt, mit Ausnahme der zweiten bistabilen Kippstufe des Fehlerregisters 8, welches wegen des Negators 84 gesetzt wird, wenn der Setztakt Ø nicht auftritt. Das Fehlerregister wird gesetzt, wenn während der Dauer eines Setztaktes Ø das Vergleichssignal DOK nicht aktiviert ist. Das Fehlerergebnis wird während der Zeit, in der der Setztakt den log. Wert 0 einnimmt, an den Ausgang übernommen. Die erste Verknüpfungseinheit 9 besteht ebenfalls aus einer bistabilen Kippstufe 90, deren Setzeingang über ein UND-Glied 91 mit dem Ausgang Q der letzten Kippstufe der Adreß-Kontrolleinheit 4 und mit dem Ausgang $\overline{Q}$ der zweiten Kippstufe des Fehlerregisters 8 verbunden ist. Ist die bistabile Kippstufe der ersten Verknüpfungseinheit 9 gesetzt, so ist an ihrem Ausgang $\overline{Q}$ das zweite Freigabesignal FREI abgreifbar.

Da in diesem Beispiel vereinbarungsgemäß die Blöcke über die drei niederwertigsten Adreß-Bits ausgewählt werden, sind die drei Adreßleitungen A0, A1, A2 und jeweils dazu parallele Leitungen mit vorgeschalteten Negatoren 14 so mit den NOR-Gliedern 12 verbunden, daß beim Anlegen der Adresse des ersten Blockes B1 das der ersten Kippstufe 40' vorgeschaltete NOR-Glied 12' den logischen Ausgangspegel 1 aufweist.

Beim Anlegen der Adresse des zweiten Blockes B2 weist ausschließlich das der zweiten Kippstufe 40 vorgeschaltete NOR-Glied einen Ausgangspegel log. 1 auf, usw.

Ein Fortschalten der Zählkette erfolgt also nur dann, wenn die bistabilen Kippstufen 40 nacheinander in aufsteigender Reihenfolge gesetzt sind.

Fig. 6 gibt für das oben veneinbarte erste Beispiel das Adressierungschema für den Speicher 7 an. Die Speicherplätze sind durch Zeilen und Blöcke festgelegt, wobei die unteren 4 Zeilen Z1 bis Z4 dem Codedatenbereich und die übrigen dem Anwenderdatenbereich zugeordnet sind. Alle Speicherplätze sind fortlaufend numeriert. Der Code-Datenbereich umfaßt dabei die Speicherplätze SO bis S31. Zum Anwenderbereich gehören die übrigen Speicherplätze S32 bis S48 und folgende. Jeweils die ersten Speicherplätze einer jeden Zeile sind einem ersten Block B1, jeweils die zweiten Speicherplätze aller Zeilen sind einem zweiten Block B2 usw. zugeordnet. Die Blöcke B1 bis B8 entsprechen den ersten Teilmengen des Adreßraumes des Speichers 7. Die Zeilenadreßleitungen entsprechen den zweiten Teilmengen des Adreßraumes.

Bei den im folgenden beschriebenen Speicherzugriffen werden ausgehend von den acht beispielhaft dargestellten Blöcken B1 bis B8 nacheinander mindestens acht Vergleichsoperationen durchgeführt. Die dabei angewählten Speicherplätze sind mit Ziffern von V1 bis V15 bezeichnet, welche die zeitliche Reihenfolge der Zugriffe angeben. Dabei wird vorausgesetzt, daß bei jeder Vergleichsoperation eine Übereinstimmung zwischen den Code-Daten und den Referenzdaten gegeben ist, was bei jeder Vergleichsoperation die Abgabe des Vergleichssignals DOK zur Folge hat. Das Fehlerregister 8 wird also in keinem Fall gesetzt.

Das zweite Freigabesignal FREI wird, wie bereits oben beschrieben, nur dann erzeugt, wenn gleichzeitig die folgenden Bedingungen erfüllt sind : Alle Blöcke B1 bis B8 müssen bezüglich des Code-Datenbereichs in aufsteigender Reihenfolge durchlaufen werden. Dabei darf das Fehlerregister 8 nicht gesetzt werden. Weitere Adressen aus dem Code-Daten- oder Anwenderdatenbereich dürfen ohne Einfluß auf die Adreßkontrolleinheit 4 in die Datenvergleiche einer Freigabeoperation einbezogen sein. Die dort abgespeicherten Referenzdaten haben aber über die Vergleichereinheit 5 Einfluß auf das Fehlerergebnis 8.

In Fig. 6a werden nacheinander die Adressen der Speicherplätze S8, S25, S26, S19, S12, S5, S6 und S23 angewählt. Diese Adressierung hat das zweite Freigabesignal FREI zur Folge, da wenigstens eine Adresse je Block angewählt und die geforderte Reihenfolge eingehalten wurde.

Im drauffolgenden Beispiel in Fig. 6b werden die Adressen der Speicherplätze S8, S26, S27, S20, S35, S6, S7 und S23 nacheinander angewählt. Da jedoch kein Zugriff auf den Block B2 erfolgt, und die Adresse des Speicherplatzes S35 im Block B5 außerhalb des Codedatenbereiches liegt, erzeugt die Adreßkontrolleinheit 4 nicht das erste Freigabesignal F. Es erfolgt keine Freigabe des Speicherzugriffs.

Im Beispiel der Fig. 6c erfolgt ebenfalls keine Freigabe, da die Reihenfolge der Anwahl von der geforderten Reihenfolge abweicht. Beim Anlegen der Adressen der Speicherplätze S8, S26, S25, S5, S6, S23, S19 uns S12 wird nämlich der Speicherplatz S26 im Block B3 vor dem Speicherplatz S25 im Block B2 angewählt.

In Fig. 6d sind wieder alle Vorbedingungen für eine Freigabe eingehalten. Es werden nacheinander die Adressen der Speicherplätze S8, S24, S33, S47, S34, S18, S10, S11, S12, S36, S35, S29, S14 uns S15 angewählt. Dabei wird in jedem Block B1 bis B8 wenigstens ein Speicherplatz des Code-Datenbereichs adressiert. Außerdem ist eine aufsteigende Reihenfolge der jeweils ersten Blockanwahl im Code-Datenbereich gegeben. Es wurde mit zulässiger Reihenfolge auf die Speicherplätze S8, S25, S18, S11, S12, S29, S14 und S15 zugegriffen.

Mit der Schaltungsanordnung nach Fig. 4, in der nur die Vollständigkeit der angewählten Adressen beim Datenvergleich, nicht aber die Reihenfolge der Anwahl von Bedeutung ist, führt auch eine Zugriffsreihenfolge nach Fig. 6c zur Erzeugung des Freigabesignals FREI.

In einer Weiterbildung der Erfindung weist die Schaltungsanordnung eine Auslesesperre auf, die verhindert, daß Speicheradressen des Codedatenbereichs ausgelesen werden können. Ferner ist eine Zählvorrichtung vorgesehen, mit welcher die Anzahl der Freigabeoperationen zählbar sind. Wird dabei eine vorgegebene Anzahl von Freigabeoperationen überschritten, beispielsweise weil der Versuch gemacht wird, durch wiederholtes Eingeben von Datenwörtern unberechtigterweise ein Codewort zu ermitteln, so wird durch eine weitere Sperre jeder weitere Zugriff auf den Speicher unterbunden.

Mit Hilfe der erfindungsgemäßen Schaltungsanordnung ist eine große Anzahl verschiedener Zeilenadressen mit den jeweiligen Blockadressen zur Erzeugung eines Freigabesignals FREI kombinierbar. Die große Anzahl der im Speicher verfügbaren geheimen Referenzdaten ermöglicht es auf einfache Weise, daß Fälschungen mit unkorrekten Referenzdaten über erfolglose Freigabeversuche erkannt werden. Die Betrugssicherheit ist besonders hoch, wenn über die Ausführung der Kontrollogik auch die Anzahl der zulässigen Freigabeversuche begrenzt ist.

**Patentansprüche**

1. Monolithisch integrierbare Schaltungsanordnung, bestehend aus einem Speicher mit nichtflüchtigen, elektrisch schreib- und löschbaren Speicherzellen, aus einer Ansteuerschaltung zum Auslesen, Schreiben und Löschen von Teilbereichen des Speichers und aus einer Kontrolleinheit, die über die Ansteuerschaltung den Zugriff zu den Teilbereichen des Speichers von einer Eingabeoperation mit Datenvergleich zwischen gespeicherten Referenzdaten und von außen eingegebenen Codedaten abhängig macht und die eine Vergleichereinheit zur Durchführung von Vergleichsoperationen zwischen mehreren Codedaten und Referenzdaten aufweist, wobei die Codedaten verschlüsselt über Anschlußleitungen von einer dialogfähigen Rechenanlage eingegeben werden, dadurch gekennzeichnet, daß der Adreßraum des die Referenzdaten aufnehmenden Speicherbereichs in mehrere, von einer ersten Auswahllogik (10) festgelegte erste Teilmengen mit jeweils mehreren Adressen unterteilt ist, und daß die die ersten Teilmengen festlegenden Adreßleitungen mit einer Adreßkontrolleinheit (4) verbunden sind, an welcher ein erstes Freigabesignal (F) abgreifbar ist, wenn im Verlauf der Vergleichsoperationen mindestens eine Adresse aus jeder ersten Teilmenge angewählt wurde.

2. Schaltungsanordnung nach Anspruch 1, dadurch gekennzeichnet, daß die Adreßkontrolleinheit (4) eine über die Adressen der ersten Teilmenge adressierbare Anzahl von Kippstufen (40, 40') aufweist, deren Ausgangssignale mit Hilfe einer UND-Logik (11) zur Erzeugung des ersten Freigabesignals (F) gesteuert werden.

3. Schaltungsanordnung nach Anspruch 1 oder 2, dadurch gekennzeichnet, daß die Adresskontrolleinheit (4) eine Zählkette zum Überprüfen einer vorgegebenen zeitlichen Reihenfolge der Anwahl der Adressen der ersten Teilmengen aufweist.

4. Schaltungsanordnung nach einem der Ansprüche 1 bis 3, gekennzeichnet durch ein Fehlerregister (8) am Ausgang der Kontrolleinheit (5), das gesetzt wird, wenn keine Übereinstimmung zwischen gespeicherten Referenzdaten und eingegebenen Daten erzielt worden ist.

5. Schaltungsanordnung nach Anspruch 4, gekennzeichnet durch eine Verknüpfungseinheit (9), welche eingangsseitig mit den Ausgängen des Fehlerregisters (8) und der Adreßkontrolleinheit (4) verbunden ist und die ein zweites Freigabesignal (FREI) abgibt, wenn das Fehlerregister (8) nicht gesetzt ist und das erste Freigabesignal (F) anliegt.

6. Schaltungsanordnung nach einem der vorhergehenden Ansprüche, gekennzeichnet durch eine zweite Auswahllogik (13) zum Festlegen von zweiten Teilmengen von Adreßleitungen jeweils als Schnittmenge mit den ersten Teilmengen.

7. Schaltungsanordnung nach Anspruch 5, dadurch gekennzeichnet, daß die erste und zweite Auswahllogik (10), (13) über eine zweite Verknüpfungseinheit mit der Adreßkontrolleinheit (4) verbunden ist, welche die Verbindung der ersten Auswahllogik: (10) zur Adreßkontrolleinheit (4) bei der Anwahl von Adressen außerhalb der zweiten Teilmengen sperrt.

8. Schaltungsanordnung nach einem der vorhergehenden Ansprüche, dadurch gekennzeichnet, daß die Dateneingabe über die Ansteuerschaltung mit Hilfe der im Speicher (7) niedergelegten Referenzdaten während einer Freigabeoperation umschlüsselbar ist.

9. Schaltungsanordnung nach einem der vorhergehenden Ansprüche, dadurch gekennzeichnet, daß die Codespeicheradressen der zweiten Teilmenge nicht auslesbar sind.

10. Schaltungsanordnung nach einem der vorhergehenden Ansprüche, dadurch gekennzeichnet, daß die Codespeicheradressen lösch - und/oder beschreibbar sind.

11. Schaltungsanordnung nach einem der vorhergehenden Ansprüche, dadurch gekennzeichnet, daß die Anzahl der möglichen Freigabeoperationen durch eine Zähl- und Sperrlogik begrenzt ist.

**Claims**

1. A monolithically integrable circuit arrangement, comprising of a store including non-volatile storage cells which can be recorded and erased electrically, a drive circuit for the read-out, write-in and erasure of sub-sections of the store, and a monitoring unit which, via the drive circuit, renders the access to the sub-sections of the store dependent upon an input operation comprising a data comparison between stored reference data items and externally input code data items, and which includes a comparator unit which performs comparison operations between a plurality of code data items and reference data items, where the code data items are input in encoded form via terminal lines from a computing unit capable of dialogue, characterised in that the address area of the storage section which accommodates the reference data items is divided into a plurality of first sub-sets which are specified by a first selection logic unit (10) and which each comprise a plurality of addresses, and that the address lines which specify the first sub-sets are connected to an address monitoring unit (4) from which a first release signal (F) can be tapped when, in the course of the comparison operations, at least one address has been selected from each first sub-set.

2. A circuit arrangement as claimed in claim 1, characterised in that the address monitoring unit (4) includes a number of flip-flops (40, 40'), which can be addressed via the addresses of the first sub-set and whose output signals are controlled by means of an AND-logic unit (11) in order to produce the first release signal (F).

3. A circuit arrangement as claimed in claim 1 or claim 2, characterised in that the address monitoring unit (4) includes a counting chain which checks a predetermined time sequence of the selection of the addresses of the first sub-sets.

4. A circuit arrangement as claimed in one of the claims 1 to 3, characterised by a fault register (8) which is arranged at the output of the monitoring unit (5) and which is set when no identity has been achieved between stored reference data items and input data items.

5. A circuit arrangement as claimed in claim 4, characterised by a logic-linking unit (9) which at its input end is connected to the outputs of the fault register (8) and of the address monitoring unit (4) and which emits a second release signal (FREI) when the fault register (8) is not set and the first release signal (F) is supplied.

6. A circuit arrangement as claimed in one of the preceding claims, characterised by a second selection logic unit (13) which specifies second sub-sets of address lines which each intersect with the first sub-sets.

7. A circuit arrangement as claimed in claim 5, characterised in that the first and second selection logic units (10, 13) are connected via a second logic-linking unit to the address monitoring unit (4) which blocks the connection of the first selection logic unit (10) to the address monitoring unit (4) when addresses outside the second sub-sets are selected.

8. A circuit arrangement as claimed in one of the preceding claims, characterised in that the data input via the drive circuit can be recoded during a release operation by means of the reference data items stored in the store (7).

9. A circuit arrangement as claimed in one of the preceding claims, characterised in that the code store addresses of the second sub-set cannot be read out.

10. A circuit arrangement as claimed in one of the preceding claims, characterised in that the code store addresses can be erased and/or recorded.

11. A circuit arrangement as claimed in one of the preceding claims, characterised in that the number of possible release operations is limited by a counting- and blocking logic unit.

**Revendications**

1. Circuit réalisable sous forme d'un circuit intégré monolithique, comprenant une mémoire avec des cellules de mémoire non volatiles, pouvant être inscrites et effacées électriquement, un circuit d'attaque pour des opérations de lecture, d'écriture et d'effacement de zones partielles de la mémoire et un dispositif de contrôle qui, au moyen du circuit d'attaque, rend l'accès aux zones partielles de la mémoire dépendant d'une opération d'entrée, avec comparaison de données entre des données de référence mémorisées et des données de code introduites de l'extérieur, et qui présente un comparateur pour effectuer des opérations de comparaison entre plusieurs données de code et données de référence, les données de code étant introduites de façon codée par des lignes de raccordement d'un ordinateur capable de dialoguer, caractérisé en ce que l'espace adresse de la zone de mémoire recevant les données de référence, est divisé en plusieurs premières quantités partielles, fixées par une première logique de sélection (10) et présentant chacune plusieurs adresses, et que les lignes d'adressage fixant les premières quantités partielles sont connectées à un dispositif de contrôle d'adressage (4), sur lequel un premier signal d'autorisation (F) peut être prélevé lorsque, au cours des opérations de comparaison, au moins une adresse de chaque première quantité partielle a été sélectée.

2. Circuit selon la revendication 1, caractérisé en ce que le dispositif de contrôle d'adressage (4) présente un certain nombre de bascules (40, 40'), adressables par les adresses de la première quantité partielle, dont les signaux de sortie sont commandés à l'aide d'une logique ET (11) pour la génération du premier signal d'autorisation (F).

3. Circuit selon la revendication 1 ou 2, caractérisé en ce que le dispositif de contrôle d'adressage (4) présente une chaîne de comptage pour vérifier le respect d'un ordre de succession dans le temps, qui a été préfixé, dans la sélection des adresses des premières quantités partielles.

4. Circuit selon une des revendications 1 à 3, caractérisé par un registre d'erreurs (8) prévu à la sortie du dispositif de contrôle (4) et qui est déclenché lorsqu'une concordance entre des données de référence mémorisées et les données introduites n'a pas été obtenue.

5. Circuit selon la revendication 4, caractérisé par une unité d'enchaînement (9) qui est connectée par son entrée aux sorties du registre d'erreurs (8) et du dispositif de contrôle d'adressage (4) et qui délivre un second signal d'autorisation (LIBRE) lorsque le registre d'erreurs (8) n'a pas été déclenché et que le premier signal d'autorisation (F) est appliqué.

6. Circuit selon une des revendications précédentes, caractérisé par une seconde logique de sélection (13) pour fixer des secondes quantités partielles de lignes d'adressage, recoupant chaque fois les premières quantités partielles.

7. Circuit selon la revendication 5, caractérisé en ce que les premières (10) et secondes logiques de sélection (13) sont connectées à travers une deuxième unité d'enchaînement au dispositif de contrôle d'adressage (4), lequel bloque la liaison de la première logique de sélection (10) au dispositif de contrôle d'adressage (4) en cas de sélection d'adresses en dehors des secondes quantités partielles.

8. Circuit selon une des revendications précédentes, caractérisé en ce que l'entrée de données peut être transcodée au moyen du circuit d'attaque, à l'aide des données de référence stockées dans la mémoire (7), pendant une opération d'autorisation.

9. Circuit selon une des revendications précédentes, caractérisé en ce que les adresses de mémoire de code de la seconde quantité partielle ne peuvent pas être lues.

10. Circuit selon une des revendications précédentes, caractérisé en ce que les adresses de mémoire de code peuvent être effacées et/ou inscrites.

11. Circuit selon une des revendications précédentes, caractérisé en ce que le nombre des opérations d'autorisation possibles est limité par une logique de comptage et de blocage.

FIG 1

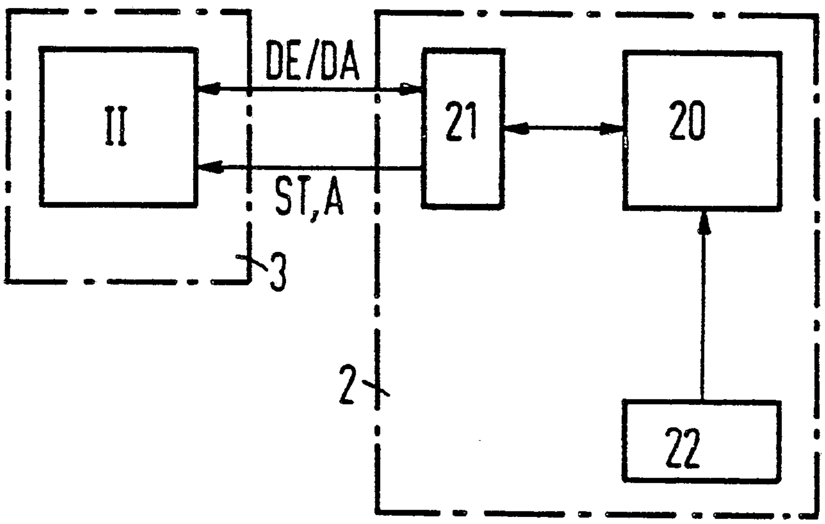

FIG 2

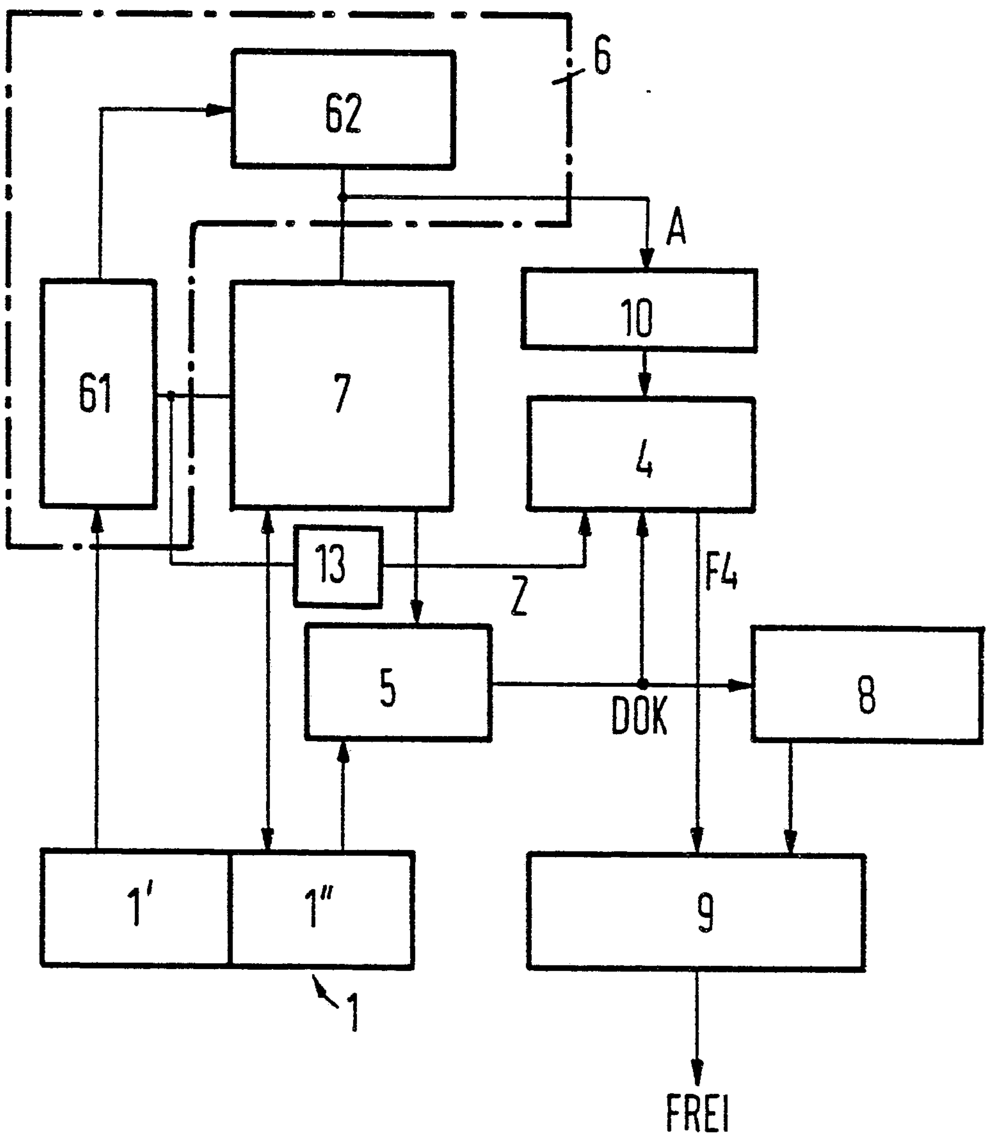

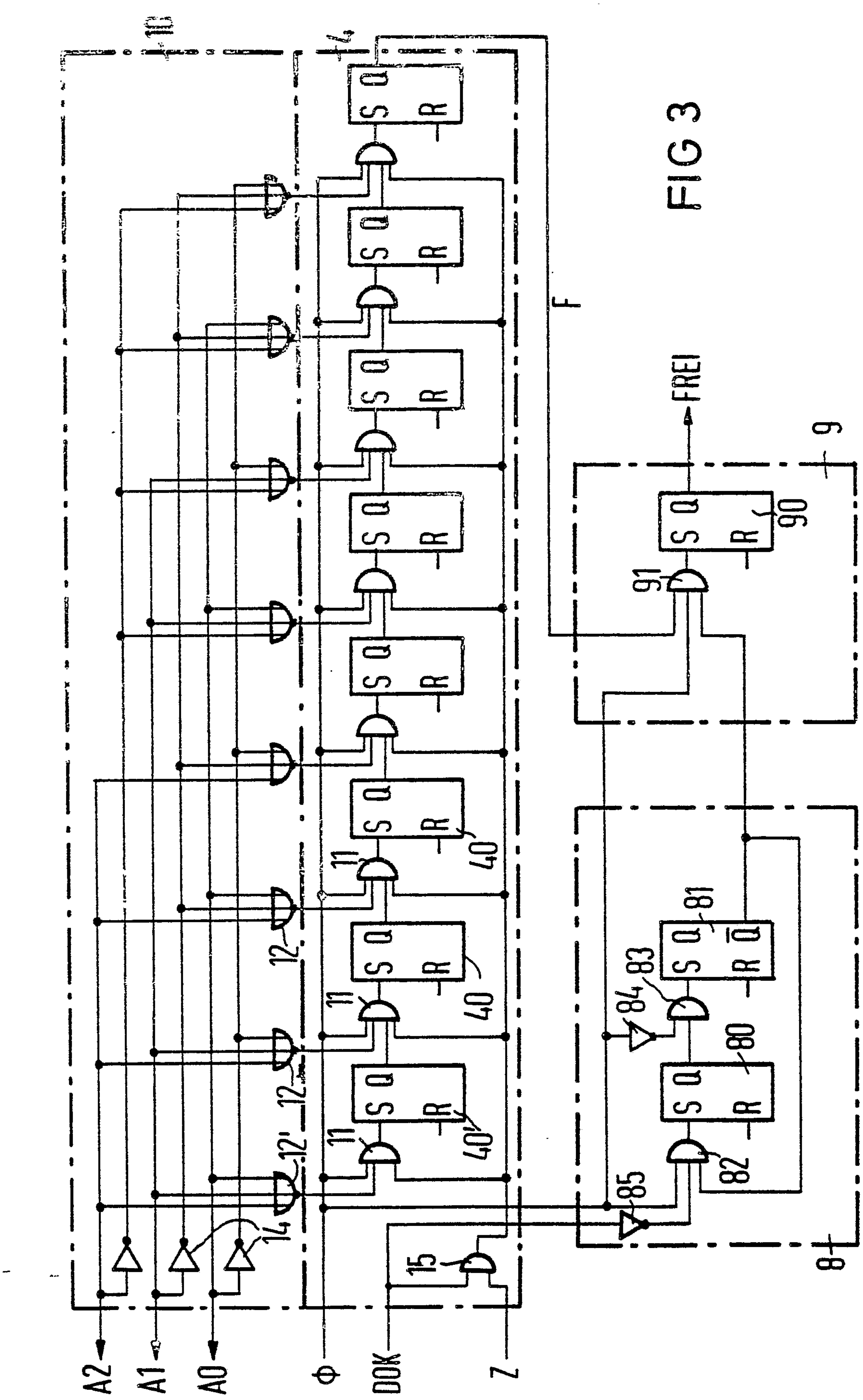
A2
A1
A0
Φ
DOK
Z
F
FREI
10
4
9
8
11
12
12'
14
15
40
40'
80
81
82
83
84
85
90
91
S
Q
R
Q̄

FIG 3

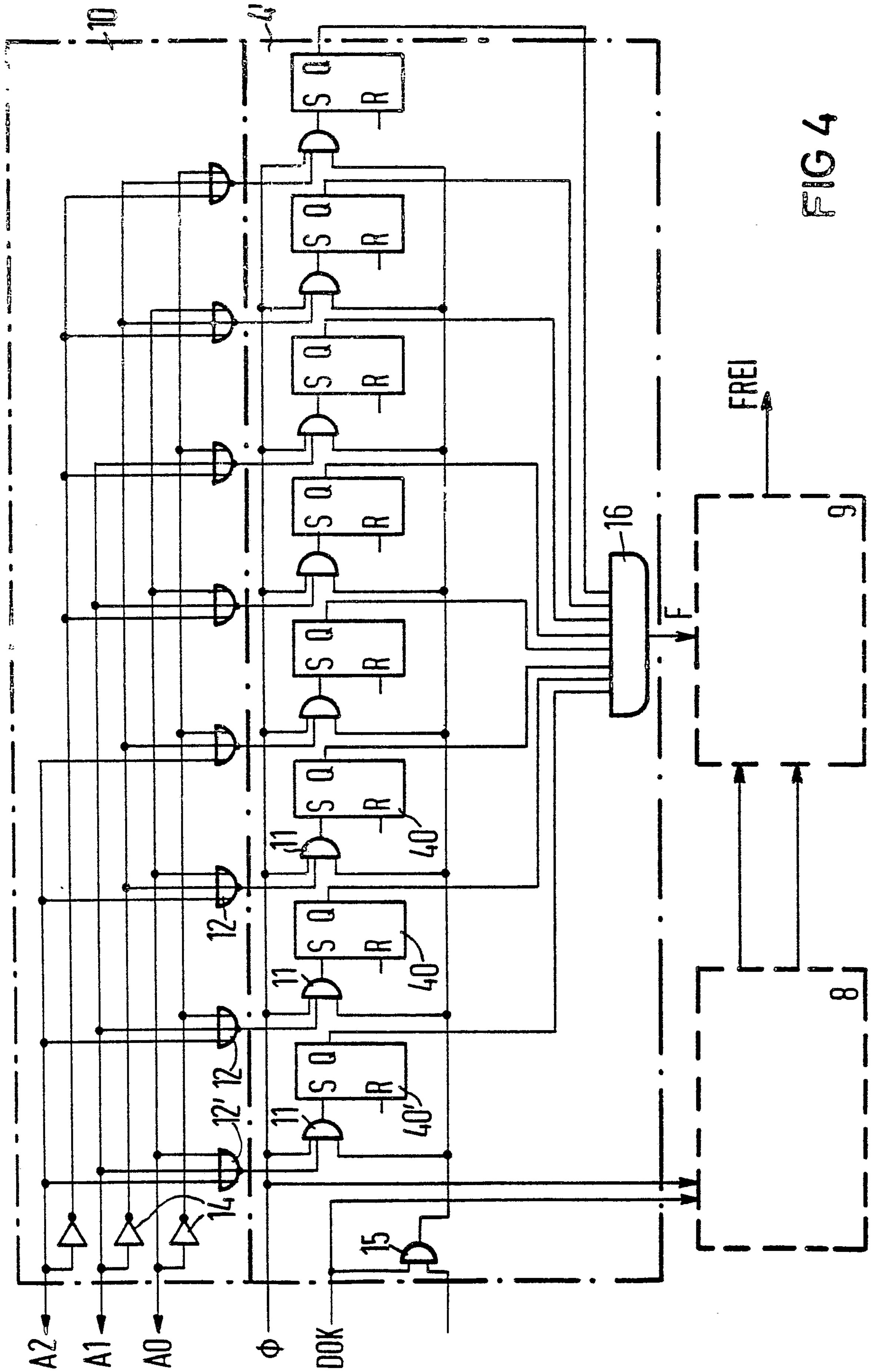


FIG 4

FIG5

| | | | | | | | | |
|---|---|---|---|---|---|---|---|---|
| Z7 | S48 | | | | | | | |
| Z6 | S40 | S41 | S42 | S43 | S44 | S45 | S46 | S47 |
| Z5 | S32 | S33 | S34 | S35 | S36 | S37 | S38 | S39 |
| Z4 | S24 | S25 | S26 | S27 | S28 | S29 | S30 | S31 |
| Z3 | S16 | S17 | S18 | S19 | S20 | S21 | S22 | S23 |
| Z2 | S8 | S9 | S10 | S11 | S12 | S13 | S14 | S15 |
| Z1 | S0 | S1 | S2 | S3 | S4 | S5 | S6 | S7 |
| | B1 | B2 | B3 | B4 | B5 | B6 | B7 | B8 |

FIG 6

a

| | | | | | | | | |
|---|---|---|---|---|---|---|---|---|
| Z7 | | | | | | | | |
| Z6 | | | | | | | | |
| Z5 | | | | | | | | |
| Z4 | | V2 | V3 | | | | | |
| Z3 | | | | V4 | | | | V8 |
| Z2 | V1 | | | | V5 | | | |
| Z1 | | | | | | V6 | V7 | |
| | B1 | B2 | B3 | B4 | B5 | B6 | B7 | B8 |

b

| | | | | | | | | |
|---|---|---|---|---|---|---|---|---|
| Z7 | | | | | | | | |
| Z6 | | | | | | | | |
| Z5 | | | | | | V5 | | |
| Z4 | | | V2 | V3 | | | | |
| Z3 | | | | | V4 | | | V8 |
| Z2 | V1 | | | | | | | |
| Z1 | | | | | | | V6 | V7 |
| | B1 | B2 | B3 | B4 | B5 | B6 | B7 | B8 |

c

| | | | | | | | | |
|---|---|---|---|---|---|---|---|---|
| Z7 | | | | | | | | |
| Z6 | | | | | | | | |
| Z5 | | | | | | | | |
| Z4 | | V2 | V3 | | | | | |
| Z3 | | | | V7 | | | | V6 |
| Z2 | V1 | | | | V8 | | | |
| Z1 | | | | | | V4 | V5 | |
| | B1 | B2 | B3 | B4 | B5 | B6 | B7 | B8 |

d

| | | | | | | | | |
|---|---|---|---|---|---|---|---|---|
| Z7 | | | | | | | | |
| Z6 | | | | | | | | V5 |
| Z5 | | V4 | V6 | V12 | V11 | | | |
| Z4 | V2 | V3 | | | | V13 | | |
| Z3 | | | V7 | | | | | |
| Z2 | V1 | | V8 | V9 | V10 | | V14 | V15 |
| Z1 | | | | | | | | |
| | B1 | B2 | B3 | B4 | B5 | B6 | B7 | B8 |